# EUROPÄISCHE PATENTSCHRIFT

(11) **EP 0 663 492 B1**
(45) Veröffentlichungstag und Bekanntmachung des Hinweises auf die Patenterteilung: **28.01.1998**
(21) Anmeldenummer: 94120030.5
(22) Anmeldetag: 17.12.1994
(51) Int. Cl.: E04F 13/08, E04F 13/14

(54) **Bauelement mit einer Betonplatte und wenigstens einer daran befestigten Steinplatte**
Building element with a concrete panel and at least one stone panel fixed thereon
Elément de construction avec une plaque en béton et au moins une plaque en pierre fixée sur celle-ci

(30) Priorität: 15.01.1994 DE 9400659 U
(43) Veröffentlichungstag der Anmeldung: 19.07.1995
(73) Patentinhaber: fischerwerke Artur Fischer GmbH & Co. KG, D-72178 Waldachtal (DE)
(72) Erfinder: Lind, Stefan, Dipl.-Ing.(FH), D-72178 Waldachtal (DE)

(56) Entgegenhaltungen:
- EP-A- 0 360 785
- DE-A- 1 962 290
- DE-U- 9 202 055
- FR-A- 704 489
- FR-A- 1 122 740

## Beschreibung

Die Erfindung betrifft ein Bauelement gemäß dem Oberbegriff des Hauptanspruchs.

Derartige Bauelemente finden beispielsweise als Fassadenplattenelemente bei der Verkleidung von Bauwerken Verwendung. Hierzu wird auf einer Betonplatte, die als Träger dient und am Bauwerk angebracht wird, wenigstens eine Steinplatte, insbesondere Natursteinplatte, befestigt. Dabei ist es wichtig, daß die beiden Platten nicht starr miteinander verbunden sind, da sowohl bei der Herstellung als auch im Einsatz Spannungen auftreten können, die durch Schwund, Toleranzen und verschiedene Wärmeausdehnungskoeffizienten verursacht werden.

Aus der EP 0 360 785 ist es bekannt, elastische Verbindungselemente vorzusehen, die in Ausnehmungen von Betonplatte und Steinplatte verankert sind, wobei zwischen Betonplatte und Steinplatte eine elastische Trennschicht angeordnet ist. Durch diese elastische Verbindung und der elastischen Trennschicht sind Steinplatte und Betonplatte relativ zueinander geringfügig beweglich, so daß ein Lösen der Steinplatte von der Betonplatte trotz der ansich vorhandenen bauphysikalischen Unverträglichkeit der beiden Werkstoffe, insbesondere im Hinblick auf die unterschiedlichen Wärmeausdehnungskoeffizienten, nicht mehr möglich ist. Die dort beschriebenen elastischen Verbindungselemente können als ganzes aus einem elastisch verformbaren Material bestehen oder einen im wesentlichen tragenden Teil aufweisen, der wenigstens im Bereich der Ausnehmungen von Betonplatte und/oder Steinplatte mit einem elastischen Überzug versehen ist.

Der vorliegenden Erfindung liegt die Aufgabe zugrunde, ein Bauelement vorzuschlagen, bei dem die Befestigung der Steinplatte an der Betonplatte verbessert ist und gleichzeitig eine geringfügige Verschiebung zwischen den beiden Materialien möglich ist.

Diese Aufgabe wird durch ein Bauelement mit den Merkmalen des Hauptanspruchs gelöst. Weitere vorteilhafte Ausgestaltungen sind den Unteransprüchen zu entnehmen.

Zur Befestigung der Steinplatte an der Betonplatte weist das Bauelement in der Steinplatte und in der Betonplatte im wesentlichen senkrecht zur Trennfläche angeordnete Schraubanker auf. Die Schraubanker weisen vorzugsweise ein Außengewinde auf für ein in der Betonplatte angeordnetes formschlüssiges Befestigungselement, das beim Herstellen der Betonplatte mit eingegossen wird. In der Steinplatte sind die Schraubanker in einer Bohrung mit Hinterschnitt über einen Kopf sowie ein sich darauf abstützendens Spreizteil befestigt, welches gewährleistet, daß einerseits der Schraubanker unlösbar in der Steinplatte befestigt ist und andererseits durch die Elastizität des Spreizteils in geringem Maß eine Bewegung des Schraubankers in der Bohrung relativ zu der Steinplatte in radialer Richtung möglich ist. In der Betonplatte ist eine den Schaft des Schraubankers umschließende Hülse vorgesehen, die eine Ausgleichsbewegung in radialer Richtung erlaubt.

Durch die Kunststoffolie zwischen der Steinplatte und der Betonplatte ist grundsätzlich eine Verschiebung der Materialien aufgrund von Spannungen möglich. Diese wird durch die Befestigung mittels des Schraubankers in der vorstehend beschriebenen Art und Weise nicht behindert. Die den Schaft des Schraubankers umschließende Hülse kann einerseits als zusätzliches elastisches Kunststoffteil ausgebildet oder in ein gleichzeitig den Schraubanker haltendes Halteteil integriert sein.

Gemäß einer bevorzugten Ausführungsform ist die Hülse in einem Einbetonierbolzen integriert, so daß dieser die Halterung des Schraubankers übernimmt und den gewünschten Bewegungsspielraum erlaubt. Dazu ist der Einbetonierbolzen mit einer Längsbohrung mit einem gewindefreien und daran anschließend mit einem Abschnitt mit Innengewinde ausgebildet, das so ausgestaltet ist, daß beim Eingriff des Außengewindes des Schraubankers in das Innengewinde ein Spiel in radialer Richtung möglich ist. Der gewindefreie Abschnitt am Eingang der Längsbohrung weist einen Innendurchmesser auf, der die radiale Bewegung des Schraubankers nicht behindert. Der Einbetonierbolzen wird beim Gießen der Betonplatte fixiert und dient dann der Halterung und zum Ausgleich von Spannungen zwischen den Platten.

Vorzugsweise stützt sich der Einbetonierbolzen auf eine Kunststoffscheibe mit einem zentralen Durchgangsloch und einem am Umfang angeordenten, der Steinplatte zugewandten Rand ab. Durch diese Kunststoffscheibe wird eine Abdichtung gegen eindringenden Beton in den Bohrungsbereich der Steinplatte als auch in den Hülsenbereich des Einbetonierbolzen erreicht. Zusätzlich ergibt sich eine großflächige Überdeckung der Kunststoffolie, was ein großzügigeres und ungenaueres Auftrennen der Folie am Befestigungsort erlaubt.

Vorteilhafterweise weist die Kunststoffscheibe zur Zentrierung zwischen Bohrlochachse in der Steinplatte und Einbetonierbolzen in der Betonplatte noch entsprechend eingreifende Zentrierabschnitte auf, die ein Verschieben der Kunststoffscheibe ohne Schraubanker nicht erlauben.

Bei dem erfindungsgemäß ausgestalteten Bauelement können somit beim Aushärten des Betons auftretende Spannungen, sowie Spannungen in Folge unterschiedlicher Wärmeausdehnungskoeffizienten beim Einsatz, zuverlässig abgebaut werden. Darüberhinaus ist gleichzeitig eine sichere Befestigung der Steinplatte an der Betonplatte gewährleistet.

Nachfolgend wir die Erfindung anhand von Ausführungsbeispielen in Verbindung mit den Zeichnungen näher erläutert.

Es stellen dar:
- Figur 1: ein Bauelement, bei dem die Befestigung einer Steinplatte mittels eines Einbetonierbolzens in der Betonplatte erfolgt, und
- Figur 2: ein Bauelement, bei dem die Befestigung einer Steinplatte direkt mittels des Schraubankers in der Betonplatte erreicht wird.

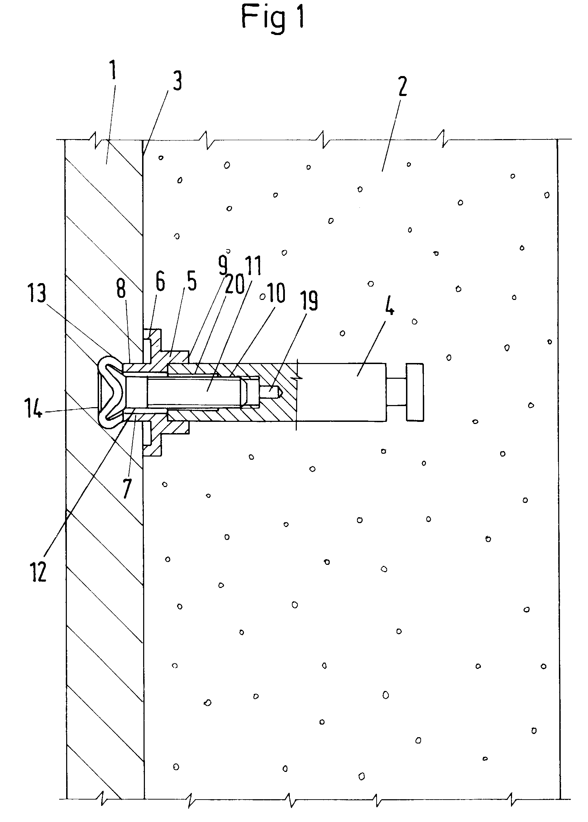

Figur 1 zeigt eine Steinplatte 1, eine Betonplatte 2 und die dazwischen liegende Kunststoffolie 3, beispielsweise aus Polyäthylen. In der Betonplatte 2 befindet sich ein Einbetonierbolzen 4, der sich auf einer Kunststoffscheibe 5 abstützt, die mit dem Rand 6 an der Steinplatte 1 anliegt und über den Abschnitt 7 in einer Bohrung 8 in der Steinplatte 1 zentriert ist. Der Einbetonierbolzen 4 ist teilweise und die Kunststoffscheibe 5 vollständig im Schnitt dargestellt, um den inneren Aufbau zu zeigen. Der Einbetonierbolzen 4 wird in dem an der Kunststoffscheibe 5 angeformten Abschnitt 9 zentriert.

Im Inneren des Einbetonierbolzens 4 befindet sich eine Längsbohrung 19 mit einem Hülsenbereich 20 und daran anschließend ein Abschnitt mit Innengewinde 10 in das das Außengewinde des Schaftes 11 eines Schraubankers 12 eingreift. Der Durchmesser des Hülsenbereichs 20 ist größer als der Außendurchmesser des Schaftes 11. Die beiden Gewinde weisen ein Spiel auf, das eine Bewegung des Schraubankers 12 relativ zu dem Einbetonierbolzen 4 in radialer Richtung erlaubt. Der Kopf des Schraubankers befindet sich in der Bohrung 8, die einen Hinterschnitt aufweist, der dazu dient, einen bekannten wellenförmig ausgebildeten Spreizring 13 aufzunehmen, der in die Bohrung eingeführt, den konischen Kopf 14 des Schraubankers 12 verspannt. Damit ist der Schraubanker 12 unlösbar mit der Steinplatte 1 verbunden. Der Spreizring 13 erlaubt ebenfalls einen geringen Ausgleich von Toleranzen in radialer Richtung des Schraubankers 12. Der Außendurchmesser des Schraubankers 12 ist geringer als der Innendurchmesser der Bohrung in der Kunststoffscheibe 5 und den Zentrierabschnitten 7, 9, so daß auch in diesem Bereich eine gewisse Beweglichkeit des Schraubankers 12 vorhanden ist.

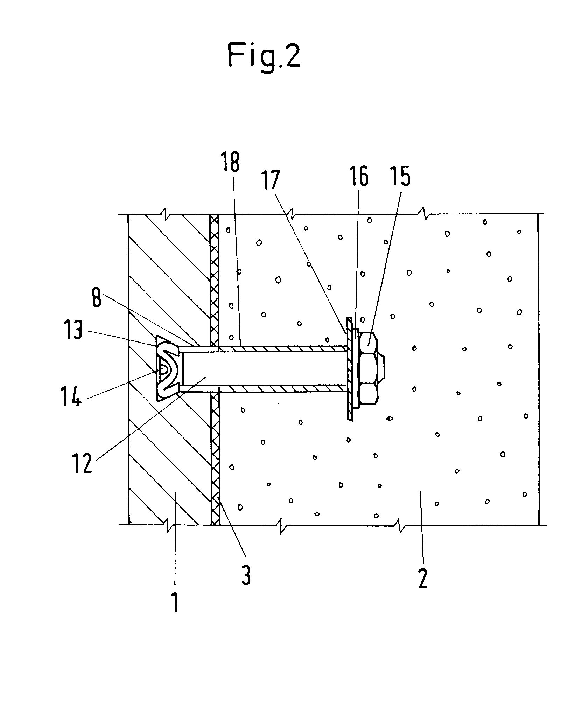

Figur 2 zeigt eine Ausführungsform, bei der der Schraubanker 12 an seinem Ende in der Betonplatte 2 eine Mutter 15 mit Unterlegscheibe 16 aufweist, die dazu dienen, formschlüssig in den Beton eingegossen zu werden, um dem Schraubanker 12 in der Betonplatte 2 den entsprechenden Halt zu geben. Zwischen der Unterlegscheibe 16 und der Kunststoffolie 3 befindet sich eine weitere Kunststoffunterlegscheibe 17 und eine Kunststoffhülse 18, die elastisch ausgestaltet ist und damit dem Schraubanker 12 in der Betonplatte 2 ebenfalls eine geringe radiale Bewegungsmöglichkeit läßt, so daß eine Verschiebung der Materialien aufgrund von Spannungen erfolgen kann. Die Befestigung des Schraubankers 12 in der Steinplatte 1 erfolgt entsprechend dem in Figur 1 dargestellten Ausführungsbeispiel.

## Patentansprüche

1. Bauelement mit einer Betonplatte und wenigstens einer Steinplatte, die über elastische Verbindungselemente und eine Trennschicht mit der Betonplatte verbunden ist, wobei zwischen der Steinplatte und der Betonplatte eine an die Flächen der Platten anliegende Kunststoffolie angeordnet ist, **dadurch gekennzeichnet,** daß zur Befestigung der Steinplatte (1) an der Betonplatte (2) in der Steinplatte (1) und der Betonplatte (2) im wesentlichen senkrecht zur Trennfläche angeordnete Schraubanker (12) vorgesehen sind, die in der Steinplatte (1) in einer Bohrung (8) mit Hinterschnitt über einen Kopf sowie einen sich darauf abstützendes Spreizteil (13) befestigt sind, und in der Betonplatte (2) derart gehalten sind, daß eine mit der Betonplatte (2) vergossene Hülse (4, 18), die den Schaft (11) des Schraubankers (12) umschließt, eine Ausgleichsbewegung in radialer Richtung erlaubt.

2. Bauelement nach Anspruch 1, **dadurch gekennzeichnet,** daß die Hülse als Einbetonierbolzen (4) ausgebildet ist, der eine Längsbohrung (12) mit einem gewindefreien Abschnitt (20) und daran anschließend einen Abschnitt mit Innengewinde (10) aufweist, wobei die Gewinde des Schraubankers (12) und das Innengewinde mit Spiel ausgebildet sind und der Innendurchmesser des gewindefreien Abschnitts (20) eine Bewegung des eingeschraubten Schraubankers (12) in diesem Bereich in radialer Richtung erlaubt.

3. Bauelement nach Anspruch 2, **dadurch gekennzeichnet,** daß der Einbetonierbolzen (4) sich auf einer Kunststoffscheibe (5) mit einem zentralen Durchgangsloch und einem am Umfang angeordneten, der Steinplatte (1) zugewandten Rand (6) abstützt.

4. Bauelement nach Anspruch 3, **dadurch gekennzeichnet,** daß an die Kunststoffscheibe ein in die Bohrung (8) in der Steinplatte (1) eingreifender Zentrierabschnitt (7) angeformt ist.

5. Bauelement nach Anspruch 3 oder 4, **dadurch gekennzeichnet,** daß an die Kunststoffscheibe (5) ein Zentrierabschnitt (9) für den Einbetonierbolzen (4) angeformt ist.

## Claims

1. Building element having a concrete panel and at least one stone panel connected to the concrete panel by means of resilient connecting elements and a separating layer, there being arranged between the stone panel and the concrete panel a plastics film lying in contact with the surfaces of the panels, **characterized in that,** for fastening the stone panel (1 ) to the concrete panel (2), there are provided in the stone panel (1) and the concrete panel (2) screw anchors (12) arranged essentially perpendicularly to the interface, which screw anchors (12) have been fastened in the stone panel (1) in a bore (8) having an undercut portion by means of a head and an expansible portion (13) mounted thereon and are held in the concrete panel (2) in such a manner that a sleeve (4, 18), which is embedded in the concrete panel (2) during casting and surrounds the shaft (11) of the screw anchor (12), allows a compensatory movement in a radial direction.

2. Building element according to claim 1, **characterized in that** the sleeve is in the form of a concrete-embeddable bolt (4), which has a longitudinal bore (12) having an unthreaded portion (20) and, adjacent thereto, an internally threaded portion (10), with the threads of the screw anchor (12) and the internal thread being provided with play and the internal diameter of the unthreaded portion (20) allowing the screw anchor (12), once screwed in, to move in a radial direction in that region.

3. Building element according to claim 2, characterized in that the concrete-embeddable bolt (4) abuts a plastics disc (5) having a central through-hole and a circumferential rim (6) facing the stone panel (1).

4. Building element according to claim 3, **characterized in that** a centring portion (7) engaging in the hole (8) in the stone panel (1) is formed integrally with the plastics disc.

5. Building element according to claim 3 or 4, **characterized in that** a centring portion (9) for the concrete-embeddable bolt (4) is formed integrally with the plastics disc (5).

## Revendications

1. Élément de construction avec une plaque en béton et au moins une plaque en pierre qui est reliée à la plaque en béton au moyen d'éléments de liaison élastiques et d'une couche séparatrice, une feuille de plastique appliquée contre les surfaces des plaques étant disposée entre la plaque en pierre et la plaque en béton, caractérisé par le fait que pour la fixation de la plaque en pierre (1) sur la plaque en béton (2) sont prévus dans la plaque en pierre (1) et la plaque en béton (2) des boulons d'ancrage (12) qui sont disposés sensiblement perpendiculairement à la surface séparatrice, sont fixés dans la plaque en pierre (1) dans un perçage (8), comportant un chambrage à contre-dépouille, au moyen d'une tête ainsi que d'une partie expansible (13) qui s'y appuie, et sont maintenus dans la plaque en béton (2) de façon qu'une douille (4, 18) qui est noyée dans la plaque en béton et enserre le fût (11) du boulon d'ancrage (12), permette un mouvement de compensation selon la direction radiale.

2. Élément de construction selon la revendication 1, caractérisé par le fait que la douille est conçue sous forme de cheville (4), noyée lors de la coulée du béton, qui présente un perçage longitudinal (12) comportant un tronçon non fileté (20) et, s'y raccordant, un tronçon à filetage intérieur (10), les filetages du boulon d'ancrage (12) et le filetage intérieur étant prévus avec jeu et le diamètre intérieur du tronçon non fileté (20) permettant un mouvement du boulon d'ancrage (12), vissé, dans cette zone selon la direction radiale.

3. Élément de construction selon la revendication 2, caractérisé par le fait que la cheville (4), noyée lors de la coulée du béton, s'appuie sur une rondelle de plastique (5) présentant un trou traversant central et une bordure (6) disposée à la périphérie, du côté de la plaque en pierre (1).

4. Élément de construction selon la revendication 3, caractérisé par le fait que sur la rondelle de plastique est formé un tronçon de centrage (7) qui vient en prise dans le perçage (8) prévu dans la plaque en pierre (1).

5. Élément de construction selon la revendication 3 ou 4, caractérisé par le fait que sur la rondelle de plastique (5) est formé un tronçon de centrage (9) pour la cheville (4) noyée lors de la coulée du béton.
